# EUROPEAN PATENT APPLICATION

(11) **EP 3 647 743 A1**
(43) Date of publication of application: **06.05.2020**
(21) Application number: 18204121.0
(22) Date of filing: 02.11.2018
(51) Int. Cl.: G01F 1/00, G01F 1/66

(54) **METHOD AND DEVICE FOR MEASURING THE SURFACE VELOCITY AND FLOW RATE OF A FLUID FLOWING IN A CHANNEL OR PARTIALLY FILLED PIPE**

(71) Applicant: Flow-Tronic S.A., 4840 Welkenraedt (BE)
(72) Inventor: SEVAR, Jean-Marie, B-4840 Welkenraedt (BE)
(74) Representative: Pronovem

(57) **Abstract**

The invention relates to a device (7) for measuring the surface velocity of a fluid (10) flowing through a pipe or a channel (12), said device (7) comprising a patch antenna (1) with a transmitting area (1a) generating a microwave signal and a receiving area (1b) receiving the microwave signal reflected on the surface of the fluid (10), the device (7) being characterized in that it comprises an electrically conductive tube (8), called reflector tube, with at least the transmitting area (1a) of the patch antenna (1) mounted at one end (8a) of the reflector tube (8) to modify the pattern of the generated microwave signal.

The invention also relates to the non-invasive method for measuring the surface velocity of the fluid using said device (7).

## Description

### FIELD OF THE INVENTION

The invention relates to a method and device to measure the surface velocity of a fluid flowing in a confined space. More specifically, the present invention relates to a non-invasive method and device with a modified microwave patch antenna.

### BACKGROUND OF THE INVENTION

Non-invasive methods for measuring the flow velocity of a fluid in a channel or sewer, i.e. methods wherein there is no contact between the probe and the fluid, are becoming more and more popular. Among the techniques used we can find acoustic methods, optical methods, laser methods and microwave methods, the last one being the most popular.

Most sewer pipes and channels as well as most industrial waste water channels are located underground and consequently are in confined space. The non-invasive microwave technology is ideal to measure the fluid velocity in those applications. Microwave signals can be generated in different ways. Pulsed radars with horn antennas were historically used for fluid velocity measurements. Horn antennas used in Pulsed Radar systems have one horn (one antenna) being used for both transmitting and receiving the signals. The microwave transducer is mounted on the base of the horn antenna. Horn antennas have the advantage to be very directional with low energy side lobes which don't interact with the narrow environment in a confined space.

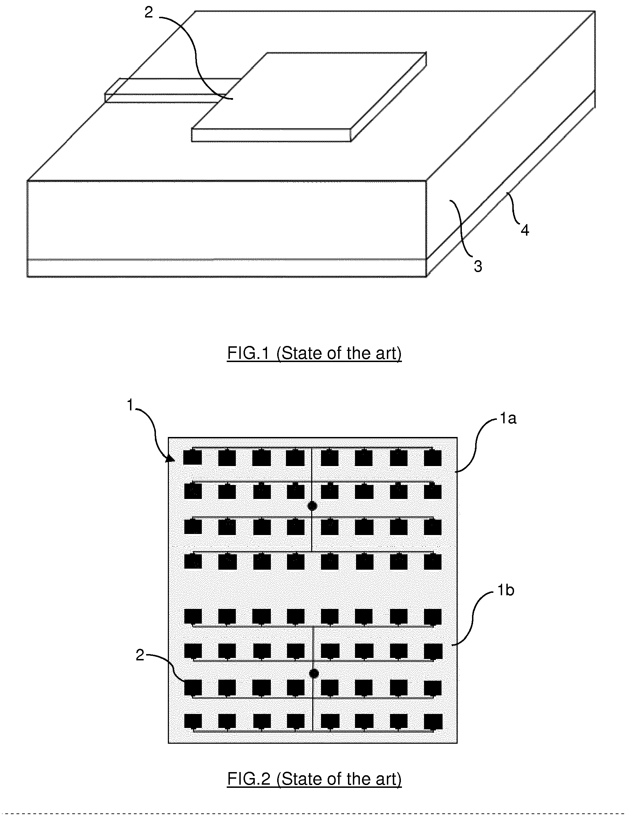

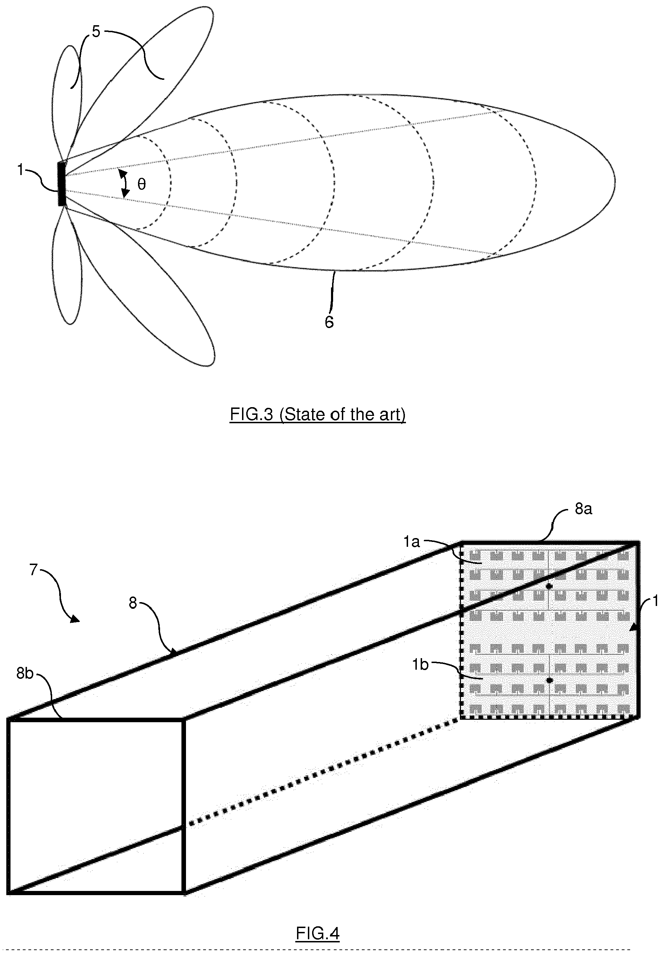

Over time due to traffic control and applications in the automobile industry another type of antenna has become very popular, the strip antenna or patch antenna or more exactly the patch array antenna 1 using a number of patches 2 which are interconnected (FIG.1 and FIG.2). The patch antenna 1 usually works as a Continuous Wave Radar with one set of patches building the transmitter antenna 1a and another set of patches building the receiver antenna 1b. The transmitter part sends out microwave energy continuously while the receiver is receiving the backscattered radiation from the fluid surface to be measured. Patch antennas with transmitter and separate receiver can be controlled to work as pulsed radar as well in order to save energy for example. They have the advantage to be less expensive than the horn antennas but the drawback to have a broader aperture angle θ and side lobes 5 with stronger energy as schematised in figure 3. Those side lobes can negatively influence their use in confined spaces by increasing the noise level and sometimes catching wrong velocity signals that are difficult or impossible to eliminate.

### SUMMARY OF THE INVENTION

The present invention aims to provide an improved non-invasive method and device for measuring the velocity of a fluid flowing in a confined space such as a sewer or an underground channel, using a patch antenna as microwave transmitter and receiver. To this end, at least the transmitting area of the patch antenna is mounted at one end of a reflector tube. The other end of the tube is left open or equipped with a microwave lens. This device with the reflector tube allows to encapsulate the side lobes of the microwave pattern and redirect them towards the portion of the fluid that requires to be illuminated for the flow velocity measurement. Optionally, as aforementioned, the other open end may be equipped with a microwave lens. This lens could reduce potential side lobes formed at the exit of the reflector tube.

### BRIEF DESCRIPTION OF THE DRAWINGS

Figure 1 represents one patch of a patch antenna according to the state of the art.
Figure 2 represents according to the state of the art a patch antenna with one set of patches building the transmitter antenna and another set of patches building the receiver antenna.
Figure 3 schematically represents the pattern of an anisotropic antenna according to the state of the art.
Figures 4-10 and 12 represent different variants of the device according to the invention for measuring the fluid velocity.
Figure 11 schematically represents the devices according to the invention located in a confined space for measuring the fluid velocity.

### DESCRIPTION OF THE INVENTION

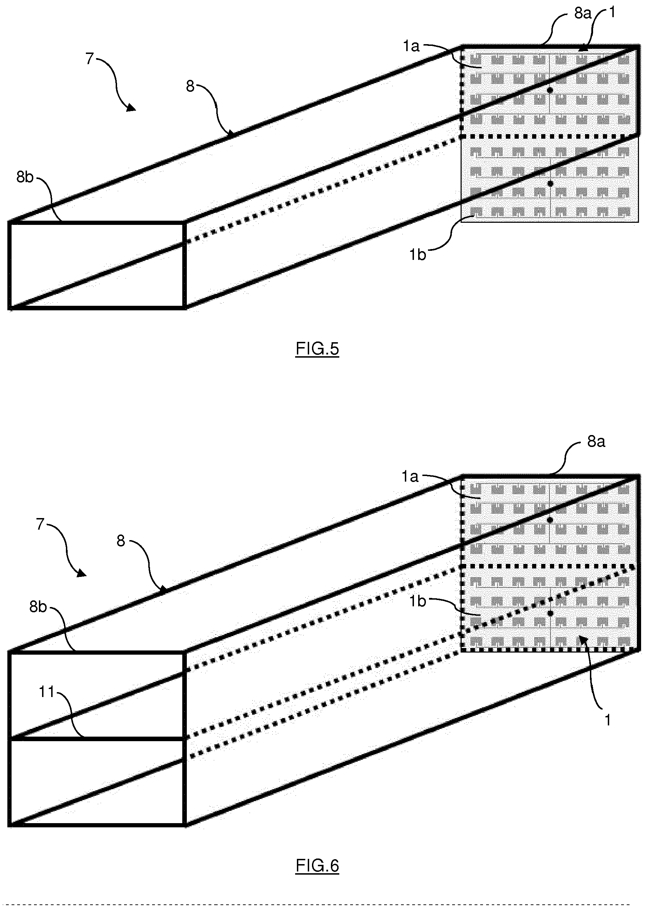

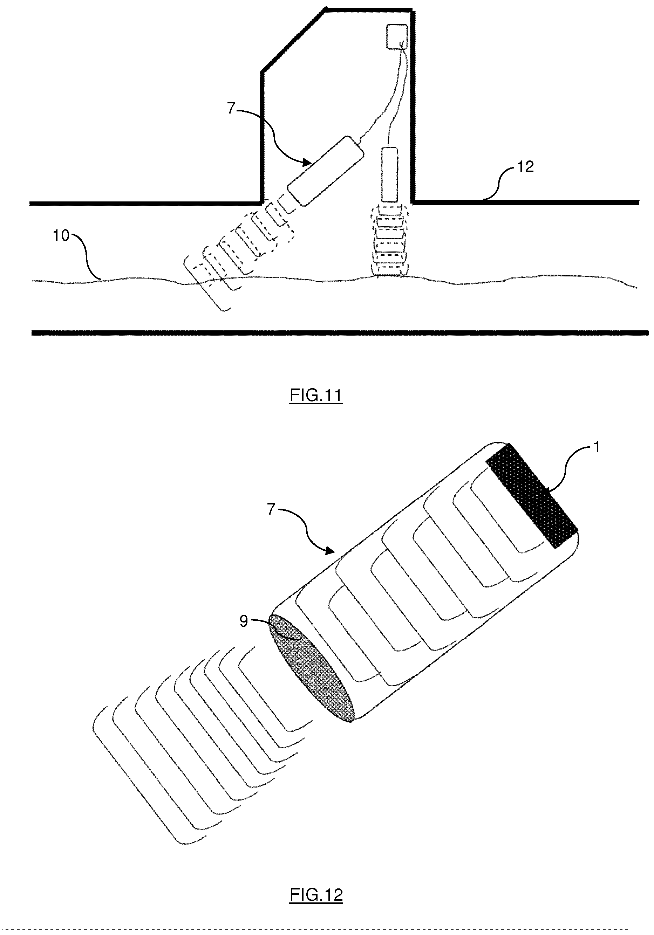

The invention relates to a non-invasive method and a device for measuring the surface velocity of a fluid flowing more specifically in a confined space. However, the present invention does not exclude to use this device for measurements in open air for rivers, irrigation channels and other large man-made channels. The device 7 comprises a patch antenna 1 with a set of interconnected patches acting as a microwave transmitter 1a and another set of interconnected patches acting as a microwave receiver 1b (FIG.4-10). As shown in figures 4 or 5, at least the set of patches acting as the transmitter 1a is mounted at one end 8a of a reflector tube 8. This tube is electrically conductive and for example in metal. The other end 8b of the reflector tube 8 is left open or might be equipped with a microwave lens 9 as illustrated in figure 12. The transmitted microwave signal is guided through this electrically conductive tubular shaped volume to the surface of the fluid 10 as represented in figure 11. This guidance through the tube allows avoiding faulty measurements on walls and other objects inside the sewer or channel.

The dimensions from the tube section can be equal or larger than the dimensions of the whole patch antenna including the transmitter and receiver as shown in figures 4 or 6. In figure 6, there is an additional electrically conductive separation 11 inside the tube 8 between the transmitting antenna 1a and the receiving antenna 1b. According to a variant, the dimensions from the tube section can be equal or larger than the dimensions of the transmitting part 1a only, leaving the receiver part 1b free (FIG.5).

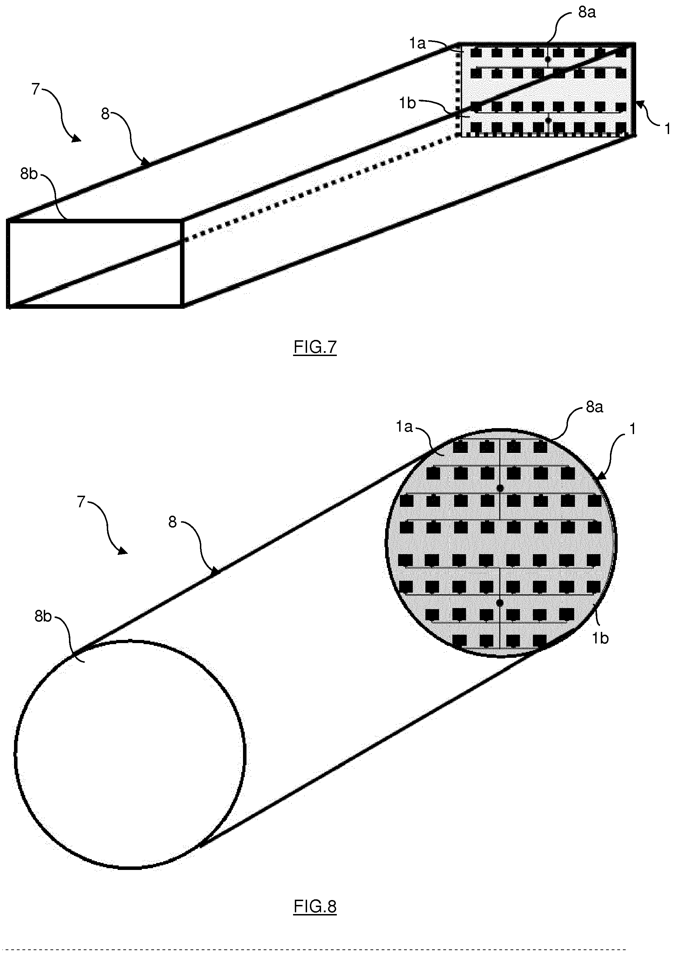

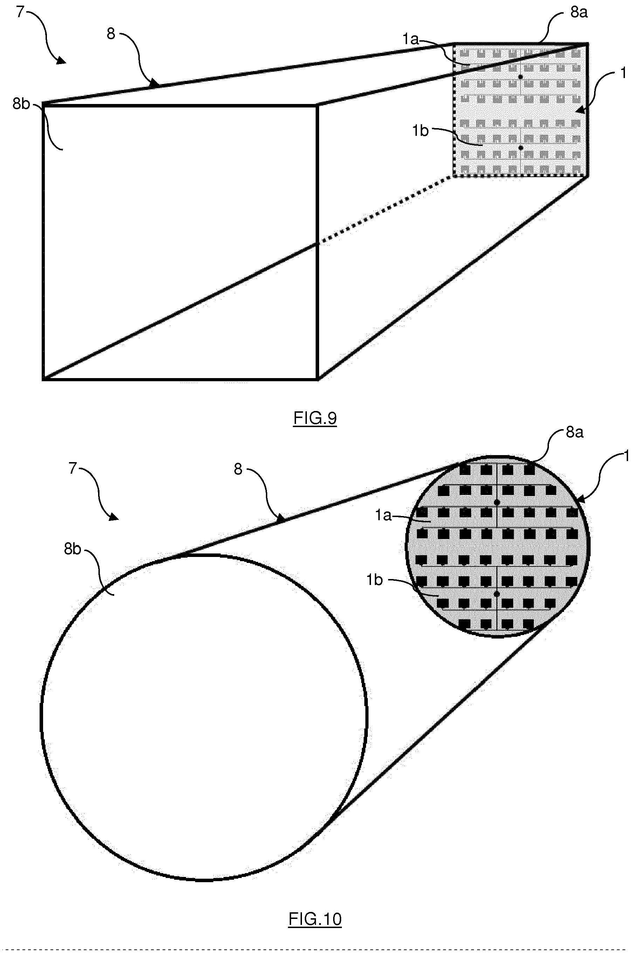

Depending on the dimensions and shape from the patch antenna the shape of the reflector tube can be square with parallel faces (FIG.4), or rectangular with parallel faces (FIG.7), or cylindrical (FIG.8). In an alternate embodiment, instead of having parallel faces the shape of the reflector tube can be pyramidal (FIG.9) or conical (FIG 10).

Preferably, the length of the reflector tube is a multiple of the wavelength (3, 6, or 12 times lambda) from the transmitting microwave frequency for a better guidance of the wave through the tube.

Using the device according to the invention, the non-invasive method for measuring the fluid velocity flowing through a pipe or channel comprises the following steps:
(a) Generating a microwave frequency signal by using the patch antenna described above,
(b) Forcing transmitted microwave signal through the reflector tube to modify the antenna pattern,
(c) Directing the transmitted microwave signal towards the surface of the fluid preferably at an acute angle,
(d) Detecting the microwave signal reflected from the fluid surface,
(e) Determining from the transmitted and reflected signals the Doppler frequency shift to calculate the surface velocity of the fluid. Indeed, as well known, the signals reflected by the surface of the liquid in motion have a frequency shift due to the Doppler effect that is directly proportional to the movement velocity of the particles and waves of the surface of the liquid generating the reflected signals.

Then different steps known from the prior art may be carried out to determine the mean velocity of the fluid into the channel based on the surface velocity of the fluid. Indeed, within a pipe traveled by a fluid, there is a velocity gradient both in the horizontal direction and the vertical direction of the wet straight section, the velocity being theoretically close to zero at the walls of the pipe. The steps may consist in applying multiplier factors on the measured surface velocity, the multiplier factors depending on the level of fluid in the pipe and being determined based on previous calibration or mathematical models. The last ones may be based on finite element models as described in the patent EP 0 681 683 B1. It simulates a set of flow-velocity distributions in a channel having a known profile, for several liquid levels in the channel. Based on a measurement of the liquid level and a velocity measurement, it next selects the simulated velocity distribution that is appropriate for the measured liquid level. On this based, a mean velocity is determined.

Preferred alternative steps for converting a surface velocity into a mean velocity are described in the document EP 3 011 278. They are the following. Each reflected pulse generates a measurement datum. The number of reflected pulses in a sequence of measurements will generate a complex mosaic of discrete data expressed in amplitude as a function of time. The spectrum of data expressed in the temporal domain is transformed into a frequency domain via a discrete Fourier transform (DFT), and preferably, a fast Fourier transform (FFT). Then a Gaussian curve is fitted on the spectrum of discrete data expressed in the frequency domain and the parameters of the Gaussian curve, namely the mean µ and the standard deviation σ, are calculated. The frequency of the mean µ and the standard deviation σ allow respectively to calculate the mean surface velocity over the illuminated zone and the velocity distribution over that same zone. It has been shown that the velocity distribution at the free surface of the liquid is representative of the vertical velocity distribution in the wet section. The mean velocity within the wet section can therefore be deduced from the mean velocity and thus the mean µ at the surface of the liquid. However, the illuminated zone may not have a sufficient size to be representative of the entire velocity distribution at the free surface of the liquid. Thus, depending on the size of the illuminated zone, the mean velocity within the pipe may be deduced directly from the mean velocity measured at the surface or indirectly via corrections or extrapolations as further explained in this document EP 3 011 278 incorporated by reference.

On this basis, the flow rate Q in the pipe or channel can be determined. It is equaled to the wet area area A multiplied by the average velocity V. To calculate the wet area, the level in the pipe or channel is measured and associated with the channel or pipe shape.

### Legend

(1) Patch antenna
   a. Transmitting area
   b. Receiving area
(2) Patch
(3) Dielectric
(4) Ground
(5) Side lobe
(6) Main lobe
(7) Device
(8) Reflector tube
   a. One end
   b. Other end
(9) Microwave lens
(10) Fluid
(11) Plate or separation
(12) Pipe, channel or sewer

## Claims

1. A device (7) for measuring the surface velocity of a fluid (10) flowing through a pipe or a channel (12), said device (7) comprising a patch antenna (1) with a transmitting area (1a) generating a microwave signal and a receiving area (1b) receiving the microwave signal reflected on the surface of the fluid (10), the device (7) being **characterized in that** it comprises an electrically conductive tube (8), called reflector tube, with at least the transmitting area (1a) of the patch antenna (1) mounted at one end (8a) of the reflector tube (8) in order to modify the pattern of the generated microwave signal.

2. Device (7) as in claim 1, **characterized in that** the cross section of the reflector tube (8) at said one end (8a) covers both the transmitting area (1a) and the receiving area (1b).

3. Device (7) as in claim 2, **characterized in that** it comprises an electrically conductive plate (11) extending along the reflector tube (8) to separate the transmitting area (1a) from the receiving area (1b).

4. Device (7) as in claim 1, **characterized in that** the cross section of the reflector tube (8) at said one end (8a) only covers the transmitting area (1a).

5. Device (7) as in any of the previous claims, **characterized in that** the reflector tube (8) has a square section with parallel faces over its length.

6. Device (7) as in any of claims 1 to 4, **characterized in that** the reflector tube (8) has a rectangular section with parallel faces over its length.

7. Device (7) as in any of claims 1 to 4, **characterized in that** the reflector tube (8) has a circular section and cylindrical shape over its length.

8. Device (7) as in any of claims 1 to 4, **characterized in that** the reflector tube (8) has a pyramidal shape over its length.

9. Device (7) as in any of claims 1 to 4, **characterized in that** the reflector tube (8) has a conical shape over its length.

10. Device (7) as in any of the previous claims, **characterized in that** the length of the reflector tube (8) is a multiple of a wavelength of the generated microwave signal.

11. Device (7) as in claim 10, **characterized in that** the length of the reflector tube (8) is equal to 3, 6 or 12 times the wavelength of the generated microwave signal.

12. Device (7) as in any of the previous claims, **characterized in that** the other open end (8b) of the reflector tube (8) is equipped with a microwave lens (9).

13. A non-invasive method for measuring a surface velocity of a fluid (10) flowing through a pipe or channel (12), comprising the steps of
(a) Generating a microwave signal by using a patch antenna (1) comprising an array of patches (2) interconnected forming a transmitting area (1a) and another array of patches (2) interconnected forming a receiving area (1b);
(b) Forcing the generated microwave signal through a reflector tube (8) to modify the pattern of the generated microwave signal;
(c) Directing the generated microwave signal towards the surface of the fluid (10);
(d) Detecting the microwave signal reflected from the surface of the fluid (10);
(e) Determining from the generated microwave signal and the reflected microwave signal a Doppler frequency shift to calculate the surface velocity of the fluid (10).

14. Non-invasive method as in claim 13, further comprising a step (f) consisting in converting the surface velocity of the fluid (10) to produce a mean velocity of the fluid (10) through the pipe or the channel (12).

15. Non-invasive method as in claim 14, further comprising a step (g) consisting in determining a flow rate of the fluid (10) through the pipe or the channel (12), said flow rate being equaled to the mean velocity multiplied by a wet area in the pipe or the channel (12).
